# EUROPEAN PATENT APPLICATION

(11) **EP 4 282 740 A1**
(43) Date of publication of application: **29.11.2023**
(21) Application number: 23166111.7
(22) Date of filing: 31.03.2023
(51) Int. Cl.: B62K 3/04, B62K 25/30

(54) **SUSPENSION FOR BICYCLES**

(30) Priority: 25.05.2022 IT 202200010841
(71) Applicant: Star Due S.r.l., 31020 San Zenone Degli Ezzelini TV (IT)
(72) Inventor: BASSO, Alcide, 36061 BASSANO DEL GRAPPA VI (IT); BASSO, Leonardo Jaime, 36061 BASSANO DEL GRAPPA VI (IT)
(74) Representative: Modiano, Micaela Nadia

(57) **Abstract**

A suspension (1) for bicycles having a frame (2) which comprises at least one head tube (3), connected to a horizontal tube (4) which is substantially horizontal and to an oblique tube (5) which is substantially oblique, the horizontal tube and the oblique tube latter being connected by means of a vertical tube (6) which is substantially vertical and is provided in a lower region with a shell (7) for a bottom bracket from which a rear stay (8) protrudes rearward which comprises a pair of horizontal rear members (9a, 9b) and a pair of vertical rear members (10a, 10b). The pair of vertical rear members (10a, 10b) is extended in the direction of the head tube (3) beyond the vertical tube (6) so as to wrap around it completely. An end or link (12) is formed from which there protrudes, in the direction of the shell (7), an elastic appendage (16) which at the terminal end (17) is fixed to the second tubular body (6). A device (19) for damping the elastic appendage (16), provided with a system for adjusting the damping, is interposed between the elastic appendage (16) and the vertical tube (6).

## Description

The present invention relates to a suspension for bicycles.

Every bicycle has a frame which, in addition to acting as supporting structure on which all the other parts of the bicycle are mounted, is subject to continuous stresses caused by the unevenness of the road surface or dirt path on which the bicycle is used.

The most common structure used to provide a frame is the so-called diamond-shaped one, which is structured with four tubular bodies (front head tube, horizontal tube, vertical tube and oblique tube) to which a rear stay is joined which is composed of horizontal rear members and vertical rear members provided with dropouts for the coupling of a rear wheel.

Currently, in order to achieve cushioning of the shocks transmitted from the ground to the wheel, systems are known which for example use a shock-absorbing saddle; however, this solution does not allow for optimal absorption of these shocks, which are transmitted to the user.

Also known is the use of pistons with an integrated spring/damper system (shock absorber), which connect the front part of the frame (diamond) with the rear stay, which is usually provided by means of a flat articulated mechanism; these pistons connect, for example, the oblique tubular body adjacent to the bottom bracket seat to the end of a fork which is in turn pivoted to the seat tube and is connected at the other end to the rear stay; this solution is above all expensive, entails an increase in bicycle weight and requires assiduous maintenance of the various elements used.

In known suspension systems there is a mechanism stroke limiter integrated into the shock absorber.

WO2021099000A1 is also known which claims a bicycle composed of:
a rear wheel with a maximum radius (R), the rear wheel defining a central plane which is perpendicular to the axis of rotation of the rear wheel and coincides with the contact with the ground of the rear wheel when the bicycle is in a vertical position on level ground,
a rear wheel suspension system according to any one of the preceding claims, the rear wheel suspension system comprising:
   a seat tube,
   a shell of the bottom bracket which defines an axis of rotation extending through it transversely to the central plane, the shell of the bottom bracket being part of or firmly fixed to the vertical tube,
   a flexible horizontal chainstay (or rear member) on the left side and a flexible horizontal chainstay (or rear member) on the right side, which extend longitudinally on both sides of the central plane, each with its front end configured for fixing to a lower portion of the vertical tube of the bicycle at less than 250 mm from the axis of rotation of a shell of the bottom bracket,
   a left lateral tube and a right lateral tube, each having lower terminal areas connected to the rear terminal areas of each one of the horizontal flexible chainstays (or rear member), and each one of the rear chainstays (or rear member) extending upward and forward with its opposite end configured to extend in a position that is outside the maximum radius (R) of the rear wheel, which is rotatably fixed and at a distance from an upper portion of the seat tube of the bicycle,
   a series of dropouts located where the flexible horizontal chainstays (or rear member) and the rear chainstays (or rear member) interconnect in order to rotatably support the rear wheel of the bicycle,
   a leaf spring connecting the vertical chainstays (or rear member) and the seat tube, wherein one end of the leaf spring is connected to the upper terminal area of the vertical chainstays (or rear member), and wherein the leaf spring extends upward from its point of connection to the upper terminal area of the vertical chainstays (or rear member) to a point of connection to the seat tube of the bicycle, the leaf spring defining opposite upper and lower surfaces, extending transversely to the central plane; the leaf spring is arranged at a distance D from the seat tube in a direction that is perpendicular to the upper and lower surfaces of the leaf spring in order to allow the flexing of the leaf spring toward the seat tube and therefore the vertical flexing of the flexible chainstays (or rear member).

This known solution has multiple drawbacks, including the fact that the stroke of the leaf spring is very limited and therefore the suspension is not effective if the wheel encounters substantial unevenness of the terrain, thus failing the purpose for which it is used.

Moreover, the placement of the leaf spring to the rear of the seat tube requires lowering the placement of the end of the left and right lateral dropouts, and this alters the usual structural shape of the frame and causes a possible weakening thereof.

The aim of the present invention is therefore to solve the described technical problems, removing the drawbacks of the cited background art and therefore devising a suspension for bicycles that makes it possible to achieve optimum absorption of the shocks of the wheel with the ground and at the same time to achieve optimum control of the damping and adjustment thereof that can be achieved as a function of the requirements of each individual user.

Within this aim, an object of the present invention is to propose a suspension that makes it possible to contain the overall weight of the bicycle.

A further object is to obtain a suspension that makes it possible to obtain a broad degree of oscillation of the rear stay without altering the structural shape of the frame while limiting the rebound effects.

Another object is to provide a suspension that makes it possible to achieve simplicity in assembly and maintenance.

Another object is to obtain a suspension that has greater reliability and durability.

Another object is to provide a suspension that is constantly connected to the frame of the bicycle in the condition of use and also has also good aesthetics.

Not the least object is to provide a suspension for bicycles that is structurally simple, has low provision costs and can be manufactured with ordinary known facilities.

This aim and these and other objects that will become more apparent hereinafter are achieved by a suspension for bicycles having a frame which comprises at least one head tube, connected to a horizontal tube and to an oblique tube, the horizontal tube and the oblique tube being connected by means of a vertical tube which is provided in a lower region with a shell for a bottom bracket from which a rear stay protrudes rearward which comprises a pair of horizontal rear members and a pair of vertical rear members, characterized in that said pair of vertical rear members is extended in the direction of said head tube beyond said vertical tube so as to wrap around it completely so as to form an end or link from which there protrudes, in the direction of said shell, an elastic appendage which at the terminal end is fixed to said vertical tube, and in that a device for damping said elastic appendage, provided with a system for adjusting said damping, is interposed between said elastic appendage and said vertical tube.

Further characteristics and advantages of the invention will become more apparent from the detailed description of a particular but not exclusive embodiment, illustrated by way of non-limiting example in the accompanying drawings, wherein:

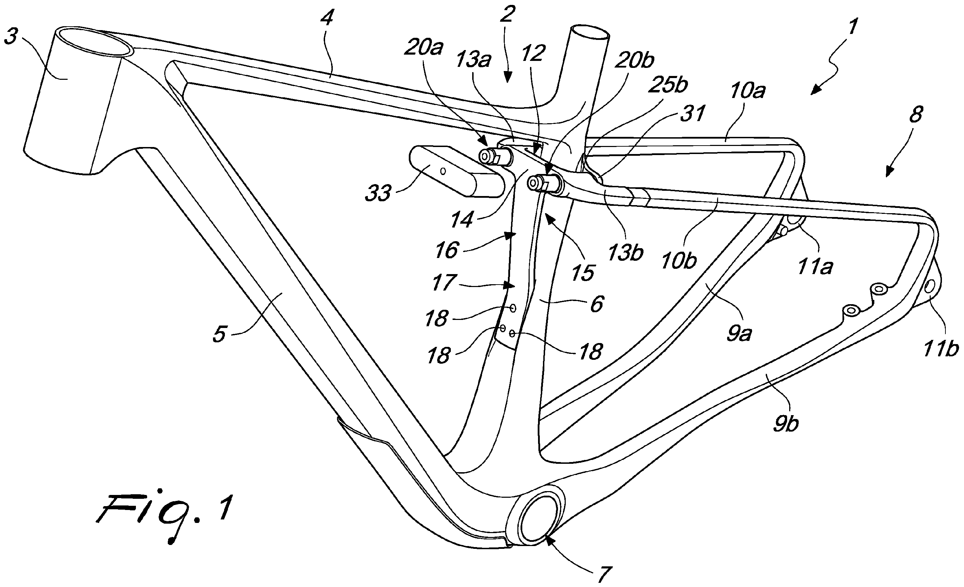

Figure 1 is a first lateral perspective view of the frame of the bicycle;

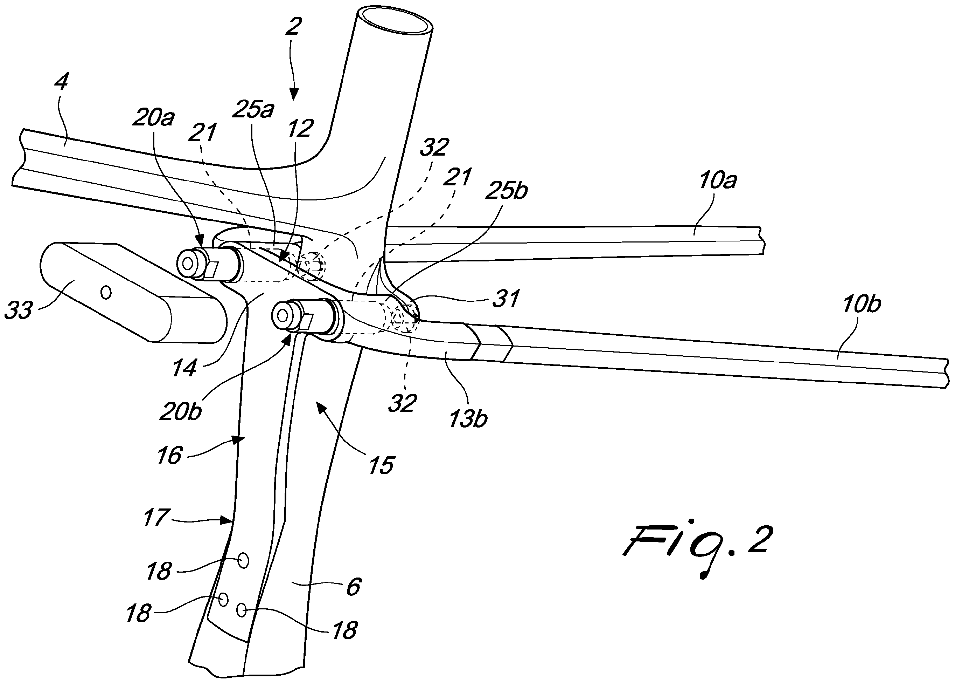

Figure 2 is a second lateral view of the suspension;

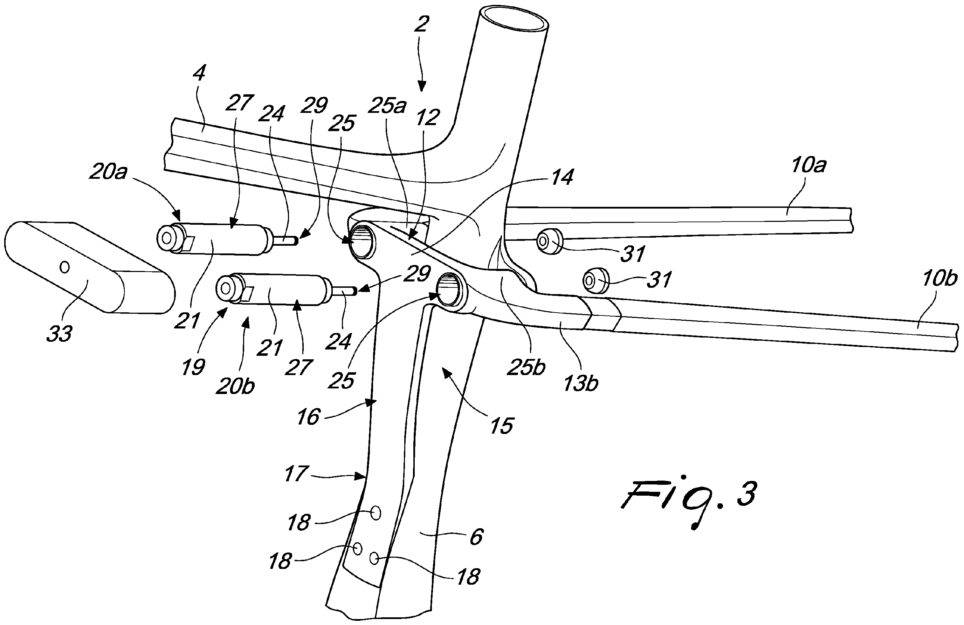

Figure 3 is a third lateral perspective view of the suspension, in which the damping device of the elastic appendage provided with a system for adjusting the damping is disassociated;

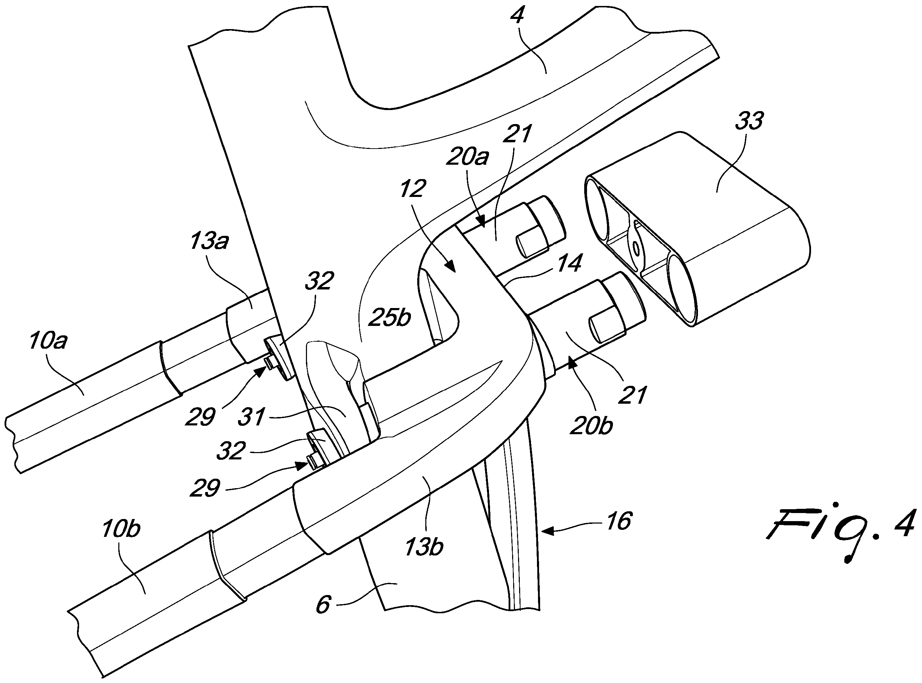

Figure 4 is a view of a detail of the suspension with the cap removed;

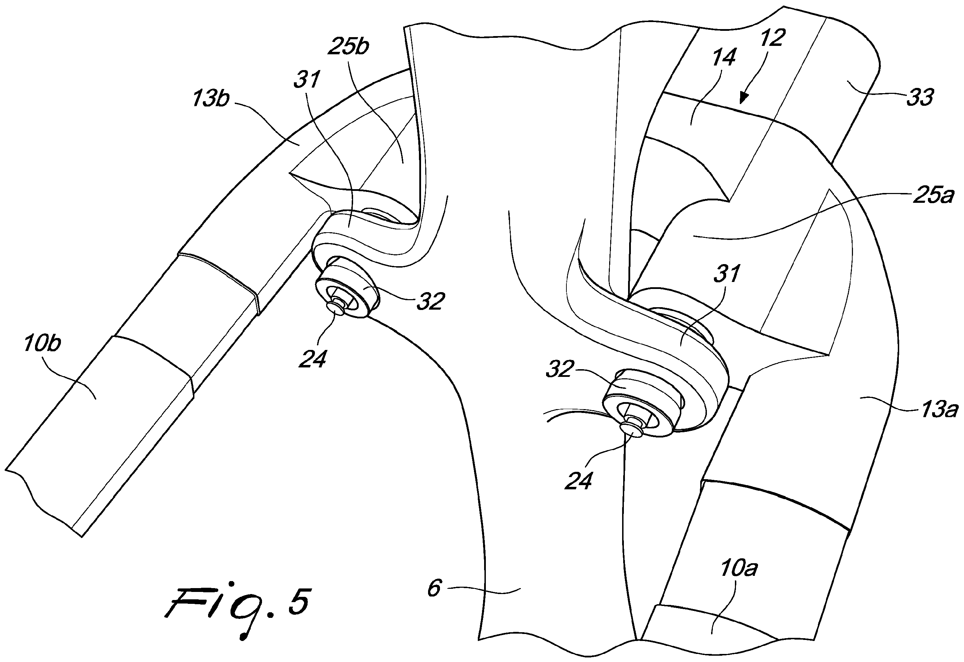

Figure 5 is a view of a detail of the suspension;

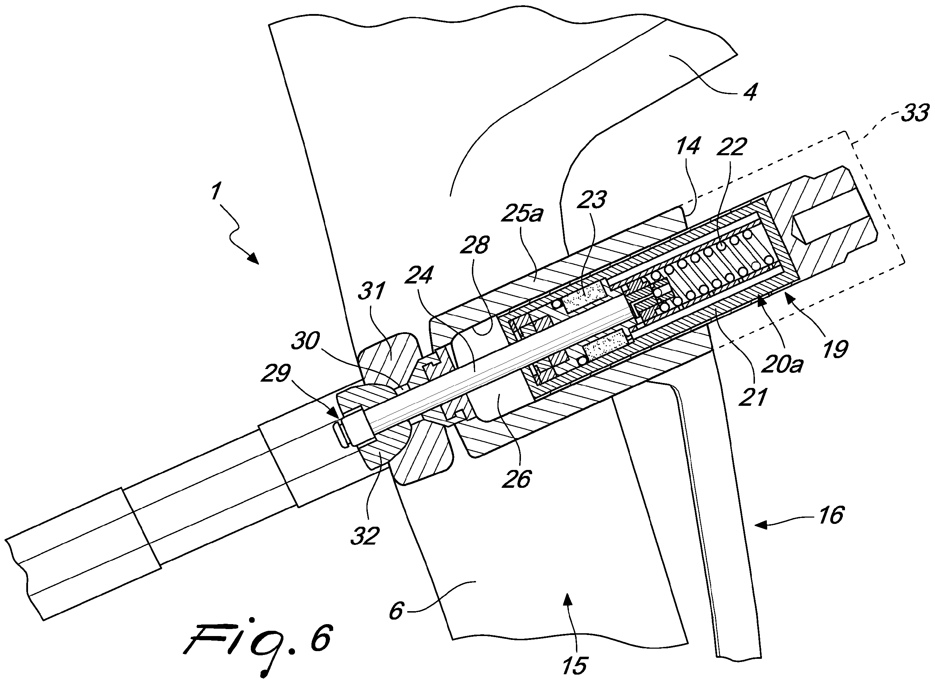

Figure 6 is a sectional view of the suspension, taken along the sectional plane traced axially to the damping device provided with a system for adjusting the damping;

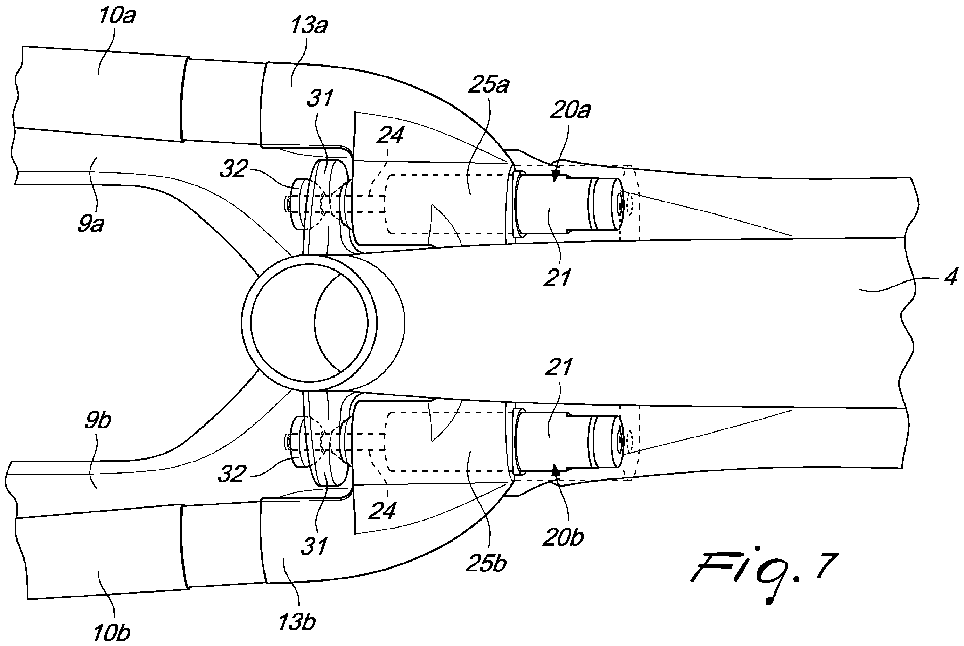

Figure 7 is a top view of the suspension.

In the examples of embodiment that follow, individual characteristics, given in relation to specific examples, may actually be interchanged with other different characteristics that exist in other examples of embodiment.

Moreover, it is noted that anything found to be already known during the patenting process is understood not to be claimed and to be the subject of a disclaimer.

With reference to the above figures, the reference numeral 1 designates a suspension for bicycles having a frame 2 which comprises at least one head tube 3, adapted to allow the connection of a front fork (not shown) and a handlebar (not shown).

The head tube 3 is connected to a horizontal tube 4 and to an oblique tube 5.

The horizontal tube 4 and the oblique tube 5 are, at the ends not connected to the head tube 3, mutually connected by means of a vertical tube 6, at the upper end of which a saddle post (not shown) can be arranged.

Below the vertical tube 6, in the region of interconnection with the oblique tube 5, there is a shell 7 for a bottom bracket to which at least one ring gear for a chain and the pedal cranks, with which the pedals can be associated, are to be connected.

A rear stay 8 is present and protrudes rearward from the shell 7 and comprises a pair of horizontal rear members 9a, 9b connected to a pair of vertical rear members 10a, 10b, at their connection there being couplings 11a, 11b for a rear wheel (not shown).

The pair of vertical rear members 10a, 10b is extended, in the direction of the head tube 3, beyond the vertical tube 6 so as to form a substantially U-shaped end or link 12 which wraps around it without interfering with it.

Such end or link 12 therefore has wings 13a, 13b and a base 14 which surround the lateral surface 15 of the vertical tube 6.

The distance between the base 14 and the lateral surface 15 varies as a function of specific requirements, such as for example the chosen degree of flexing that can be achieved by the suspension, the type and dimensions of the bicycle or mountain bike, the weight of the user.

At least one elastic appendage 16 of chosen length is associated at the base 14 and protrudes in the direction of the shell 7.

The appendage 16 is therefore initially spaced from the lateral surface 15 and has such a shape as to approach the lateral surface 15 until its terminal end 17 is arranged in contact with and fixed to the vertical tube 6 by means of one or more adapted first screws or bolts 18.

The elastic appendage 16 is made for example of metal and/or composite material.

A device 19 for damping the elastic appendage 16, provided with a system for adjusting the damping which acts both during the elastic deformation step and during the elastic return step of the appendage 16, is interposed between the elastic appendage 16 and the vertical tube 6.

Such device 19 is constituted by a pair of double-acting hydraulic pistons 20a, 20b of the known type, which are adapted to obtain the damping of the elastic appendage 16; the pair comprises a system for adjusting the damping, the device 19 acting both during the elastic deformation step and during the elastic return step of the appendage 16.

Each one of the pistons 20a, 20b is constituted for example by a cylindrical body 21 which accommodates internally a stem or stalk 24 so that it can slide and in contrast with an elastically deformable element 22 and an adapted elastomer or a gas-actuated accumulator 23.

Therefore, the stem or stalk 24 works in both directions, sliding forward and backward (retraction and extension), along its own axis, allowing dampening and adjustment of the compression of the elastic appendage 16.

At the outer lateral regions of the base 14 that do not face the vertical tube 6 there is a tubular element 25a, 25b, which is directed toward the vertical tube 6 and is arranged laterally thereto, and axially to which an adapted seat 26 is provided which is adapted to accommodate each one of the complementarily shaped cylindrical bodies 21.

Each one of the cylindrical bodies 21 can be coupled to the seats 26 for example by providing an adapted thread on their outer lateral surface 27, which affects a complementarily threaded thread obtained on the inner lateral surface 28 of the seats 26.

The longitudinal dimension of the double-acting hydraulic pistons 20a, 20b is such that once the cylindrical bodies 21 are associated with the seats 26, the terminal end 29 of the stem or stalk 24 moves beyond an adapted hole 30 provided in an appendage 31 which protrudes transversely and to the rear of the vertical tube 6, each one of the holes 30 being axially aligned with each one of the seats 26.

Advantageously, a ring 32 made of plastic material is interposed between the terminal end 29 and the appendage 31 and has the purpose of limiting the flexural loads on the stem or stalk 24 of each hydraulic piston 20a, 20b during the extension and retraction steps.

Each one of the cylindrical bodies 21 has an end that protrudes externally to the tubular elements 25a, 25b, the end being concealable by means of an adapted removable cap 33.

In a suspension for bicycles, compression is understood to be the step during which the bottom bracket moves closer to the ground due to a collision with a protruding region of the terrain; during this step the deformation of the elastically deformable element 22 occurs, whereas return is understood to mean the step after compression, in which the bottom bracket moves away from the ground and returns to its original position, and this occurs due to the force generated by the elastic return of the element 22 deformed during the compression step.

It has thus been found that the invention has achieved the intended aim and objects, a suspension for bicycles having been obtained which makes it possible to achieve an optimum and broad absorption of the impacts of the wheel with the various protrusions of the terrain, by virtue of the U-shaped end of the vertical rear members 10a and 10b, which do not interfere directly with the vertical tube 6 but go beyond it, wrapping around it, and are connected thereto by means of the elastic appendage 16 associated with the vertical tube 6.

This structural shape and arrangement allows an optimum absorption of the impacts transmitted to the wheels while avoiding rebound effects and thus making it easier for the user to operate the vehicle.

Moreover, the suspension allows, by virtue of the presence of the device 19, to achieve optimal control of the damping of the suspension as a function of the requirements of each individual user.

There is also the possibility to adjust the suspension by screwing in the double-acting hydraulic pistons 20a,20b into the seats 26 to a greater or lesser extent.

Moreover, the solution shown makes it possible to contain the total weight of the bicycle, a very relevant factor in making it less tiring and easier for the user to operate the bicycle.

Therefore, the suspension makes it possible to achieve a large degree of oscillation of the rear stay, while maintaining a usual structural shape of the frame, which has simplicity of assembly and maintenance.

The simplicity of the suspension, due to the limited number of components thereof, makes it possible moreover to achieve better reliability and durability besides having low provision and assembly costs.

The fact is stressed that the suspension is provided with an elastic element (the appendage 16) integrated into the structure of the frame 2 and a damping element (the device 19) separate therefrom.

Moreover, the suspension has a stroke limiting system that is independent of the elastic component and the damping system of the suspension.

The materials used, as well as the dimensions that constitute the single components of the invention, may of course be more pertinent to the specific requirements.

Friction dampers or elastomeric dampers can also be used instead of the double-acting hydraulic pistons 20a, 20b.

The characteristics indicated as advantageous, convenient or the like, may also be omitted or replaced with equivalents.

The disclosures in Italian Patent Application No. 102022000010841 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A suspension (1) for bicycles having a frame (2) which comprises at least one head tube (3), connected to a horizontal tube (4) and to an oblique tube (5), the horizontal tube and the oblique tube being connected by means of a vertical tube (6) which is provided in a lower region with a shell (7) for a bottom bracket from which a rear stay (8) protrudes rearward which comprises a pair of horizontal rear members (9a, 9b) and a pair of vertical rear members (10a, 10b), **characterized in that** said pair of vertical rear members (10a, 10b) is extended in the direction of said head tube (3) beyond said vertical tube (6) so as to wrap around it completely so as to form an end or link (12) from which there protrudes, in the direction of said shell (7), an elastic appendage (16) which at the terminal end (17) is fixed to said vertical tube (6), and **in that** a device (19) for damping said elastic appendage (16), provided with a system for adjusting said damping, is interposed between said elastic appendage (16) and said vertical tube (6).

2. The suspension according to claim 1, **characterized in that** said pair of vertical rear members (10a, 10b) is extended, in the direction of said head tube (3), beyond said vertical tube (6) so as to form said end or link (12) which wraps around it without interfering with it.

3. The suspension according to one or more of the preceding claims, **characterized in that** said end or link (12) has wings (13a, 13b) and a base (14) which surround the lateral surface (15) of said vertical tube (6).

4. The suspension according to one or more of the preceding claims, **characterized in that** the distance between said base (14) and said lateral surface (15) is a function of specific requirements, such as the chosen degree of flexing that can be achieved by said suspension (1), the type and dimensions of said bicycle, the weight of the user.

5. The suspension according to one or more of the preceding claims, **characterized in that** at least one elastic appendage (16) of chosen length is associated at said base (14) and protrudes in the direction of said shell (7).

6. The suspension according to one or more of the preceding claims, **characterized in that** said appendage (16) is, when inactive, spaced from said lateral surface (15) and has such a shape as to approach said lateral surface (15) until its terminal end (17) is arranged in contact with and fixed to said vertical tube (6) by means of one or more first screws or bolts (18).

7. The suspension according to one or more of the preceding claims, **characterized in that** said device (19) is constituted by a pair of double-acting hydraulic pistons (20a, 20b) which use air or oil or elastically deformable elements and are adapted to obtain the damping of said elastic appendage (16) and the adjustment of said damping by acting both during the elastic deformation step and during the step of elastic return of said appendage (16).

8. The suspension according to one or more of the preceding claims, **characterized in that** each one of said hydraulic pistons (20a, 20b) is constituted by a cylindrical body (21) which accommodates internally a stem or stalk (24) so that it can slide and in contrast with an elastically deformable element (22) and/or an elastomer or a gas- or oil-actuated accumulator (23).

9. The suspension according to one or more of the preceding claims, **characterized in that** at the outer lateral regions of said base (14) that do not face said vertical tube (16) there is a tubular element (25a, 25b), which is directed toward said vertical tube (6) and is arranged laterally thereto, axially to said tubular element (25a, 25b) there being a seat (26) each being adapted to accommodate one of said complementarily shaped cylindrical bodies (21).

10. The suspension according to one or more of the preceding claims, **characterized in that** each one of said cylindrical bodies (21) can be coupled to said seats (26) by providing a thread on their outer lateral surface (27), which affects a complementarily threaded thread obtained on the inner lateral surface (28) of said seats (26), said suspension (1) having a stroke limiting system which is independent of the elastic component and of the damping system of said suspension (1).

11. The suspension according to one or more of the preceding claims, **characterized in that** the longitudinal dimension of said double-acting hydraulic pistons (20a, 20b) is such that once said cylindrical bodies (21) are associated with said seats (26), the terminal end (29) of said stem or stalk (24) passes beyond a hole (30) provided in an appendage (31) which protrudes transversely and to the rear of said vertical tube (6), each one of said holes (30) being axially aligned with each one of said seats (26), a ring (32) made of plastic material being interposed between said terminal end (29) and said appendage (31).

12. The suspension according to one or more of the preceding claims, **characterized in that** each one of said cylindrical bodies (21) has an end that protrudes externally to said tubular elements (25a, 25b), said end being concealable by means of a removable cap (33).

13. The suspension according to one or more of the preceding claims, **characterized in that** said device (19) is constituted by friction dampers or elastomeric dampers.
